# FASCICULE DE BREVET EUROPEEN

(11) **EP 0 350 360 B1**
(45) Date de publication et mention de la délivrance du brevet: **31.08.1994**
(21) Numéro de dépôt: 89401744.1
(22) Date de dépôt: 20.06.1989
(51) Int. Cl.: H01J 23/20, H02K 9/08

(54) **Magnétron agile avec moteur d'accord à refroidissement amélioré**
Schnell frequenzwechselndes Magnetron mit einem Abstimmungsmotor mit verbesserter Abkühlung
Frequency-agility magnetron with a tuning motor using enhanced cooling

(30) Priorité: 08.07.1988 FR 8809308
(43) Date de publication de la demande: 10.01.1990
(73) Titulaire: THOMSON-CSF, 75008 Paris (FR)
(72) Inventeur: Vermersch, Alain, F-92045 Paris la Défense (FR)
(74) Mandataire: Guérin, Michel

(56) Documents cités:
- EP-A- 0 239 333
- DE-C- 293 616
- FR-A- 1 050 910
- FR-A- 1 088 857
- US-A- 3 599 035
- CRC Handbook of Chemistry and Physics, 60th ed., pages E2 -E4

## Description

L'invention concerne les magnétrons, et plus spécialement les magnétrons agiles, c'est-à-dire des magnétrons dont la fréquence est accordable très rapidement.

De tels magnétrons sont réalisés généralement selon deux sortes de techniques.

La première technique consiste à faire tourner à l'extrémité du circuit hyperfréquence du magnétron un système d'ailettes dont la présence modifie la fréquence d'accord. La fréquence du magnétron varie alors en fonction de la périodicité, régulière ou non, de passage des ailettes entraînées par un moteur rotatif. Ces magnétrons sont appelés en anglais "Spin-tuned magnetrons".

La deuxième technique consiste à modifier l'accord par un piston qui se déplace linéairement dans une cavité d'accord. Le piston est mû par un moteur linéaire constitué comme une bobine de haut-parleur; ces magnétrons sont appelés en anglais "voice-coil magnetrons". Un tel magnétron est décrit notamment dans le brevet US-A- 3 599 035. Une bobine parcourue par un courant variable est placée dans l'entrefer d'un aimant produisant un champ radial par rapport à la bobine.

Dans les deux techniques, le moteur (linéaire ou rotatif) comporte des bobinages parcourus par des courants relativement importants; ces bobinages chauffent et le moteur est refroidi par conduction thermique à travers les supports mécaniques et par convexion thermique à travers l'atmosphère environnant les bobinages du moteur.

Pour résoudre le problème de la dissipation thermique, on a cherché à optimiser des paramètres tels que le nombre de spires des bobinages et la section des fils constituant les bobinages.

Pour bénéficier d'une bonne agilité de fréquence, il faut utiliser une masse faible de bobinages; cela permet de réduire l'énergie cinétique de l'ensemble mobile, donc la puissance nécessaire pour le mouvoir.

Il faut donc réduire la longueur des spires de bobinage et/ou leur section, c'est-à-dire qu'on peut jouer sur trois paramètres: nombre de spires, section du bobinage, diamètre des spires. Mais si on réduit le nombre de spires, on réduit la force électromagnétique qui s'exerce sur le bobinage; si on réduit le diamètre des spires c'est la même chose. Et si on réduit la section des fils du bobinage, on augmente la résistance électrique du bobinage, donc on augmente la quantité de chaleur.

On est donc très limité sur les possibilités de choix de nombre de spires, de section des fils et de diamètre, et on s'aperçoit que pour obtenir un magnétron véritablement agile, il faut un moteur dissipant une quantité de chaleur élevée dans un faible volume.

Des valeurs typiques calculées sont par exemple un diamètre de 48 millimètres, une résistance de 0,02 ohms, une densité de courant de 30 ampères par millimètre carré de section de conducteur, une dissipation thermique de 50 watts, une surface de bobine d'environ 15 centimètres carrés pour dissiper la puissance, et par conséquent une densité de puissance à évacuer de l'ordre de 3 watts par centimètre carré de surface extérieure de bobine.

Selon l'invention, on joue sur le fait que le bobinage du moteur est très proche des pièces polaires (espacement inférieur à 1 millimètre environ), de sorte que la transmission de chaleur à travers cet espace peut se faire de manière prépondérante par conduction thermique à travers cet espace s'il est rempli d'un gaz, alors que la transmission de chaleur se ferait d'une manière prépondérante par convexion si l'épaisseur était notablement plus importante.

C'est pourquoi, selon l'invention, on propose de remplir l'espace dans lequel se déplacent les bobinages avec un gaz à haute conductivité thermique tel que de l'hydrogène ou de l'hélium.

La présente invention concerne un magnétron conforme à celui de la revendication 1.

Par haute conductivité thermique on entendra ici une conductivité thermique qui est égale à plusieurs fois celle, de l'air, de préférence au moins trois à quatre fois celle de l'air. A titre d'exemple, l'hélium a une conductivité thermique d'environ six fois celle de l'air et l'hydrogène environ sept fois celle de l'air.

Le refroidissement ainsi obtenu par conduction thermique à travers une lame gazeuse très mince, inférieure de préférence à 1 millimètre, entre le bobinage dissipant de la chaleur et les pièces polaires du moteur servant de radiateur de dissipation, peut être beaucoup plus efficace; on estime qu'en présence d'air on obtiendrait un écart de température de plusieurs centaines de degrés entre les bobinages et la paroi froide des pièces polaires, alors qu'on doit pouvoir descendre dans les mêmes conditions au dessous de cent degrés avec de l'hélium, et encore moins avec de l'hydrogène.

La mince lame gazeuse dans l'entrefer joue le rôle d'un shunt thermique très efficace entre le bobinage (source de chaleur) et les pièces polaires (drain thermique).

De préférence, le gaz est enfermé dans une enceinte étanche. La pression de ce gaz peut être la pression atmosphérique, mais l'évacuation de chaleur est encore améliorée si la pression est plus élevée; on choisira donc de préférence une pression de l'ordre de une à trois fois la pression atmosphérique.

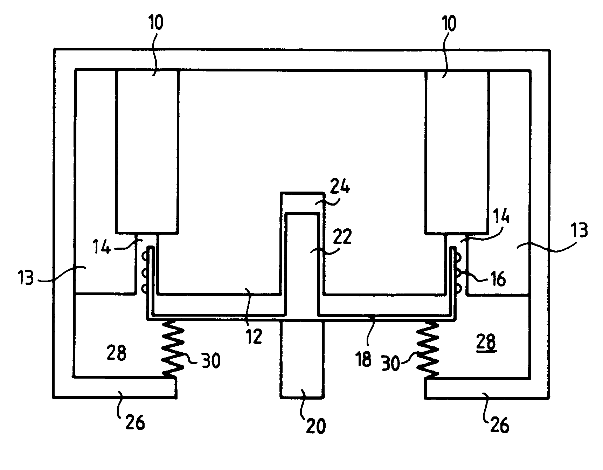

La figure unique représente la structure générale d'un moteur linéaire de magnétron agile selon l'invention.

L'invention est décrite et représentée en détail à propos d'un moteur de type linéaire du type à bobine de haut-parleur car c'est là qu'elle trouve son application la plus intéressante.

Le moteur selon l'invention comprend un aimant ou un ensemble d'aimants 10 produisant un champ radial par rapport à l'axe de la bobine, qui est un axe vertical sur la figure.

Le champ de l'aimant se referme radialement grâce à deux pièces polaires 12 et 13 définissant entre elles un entrefer cylindrique étroit 14. La bobine 16 constituant l'élément actif du moteur est une bobine cylindrique pouvant se déplacer verticalement dans cet entrefer.

La bobine 16 fait partie d'un équipage mobile 18 constitué d'une part par un support pour la bobine et d'autre part un piston 20 qui entraîne un élément d'accord du magnétron. Cet élément d'accord n'est pas représenté; il peut être constitué par l'extrémité du piston ou tout autre élément entraîné par le piston.

Le déplacement de l'équipage mobile ne peut se faire qu'axialement, le mouvement étant guidé par un arbre 22 solidaire de l'équipage mobile, l'arbre 22 pénétrant dans un alésage axial 24 de l'une des pièces polaires.

Une enceinte étanche 26 entoure la zone dans laquelle peut se déplacer la bobine 16, c'est-à-dire principalement l'entrefer 14.

Cette enceinte est remplie d'un gaz à haute conductivité thermique 28, de préférence de l'hydrogène, ou de l'hélium dont la conductivité thermique est légèrement plus faible mais qui est moins dangereux.

L'enceinte est de préférence fermée et étanche bien qu'on puisse imaginer aussi des réalisations dans lesquelles il y a une circulation du gaz 28 à haute conductivité thermique. La pression dans l'enceinte est soit la pression atmosphérique soit, comme on l'a dit plus haut une pression plus élevée, par exemple entre une et trois fois la pression atmosphérique.

La fermeture de l'enceinte 26 est par exemple assurée par une membrane souple 30 fixée d'une part à la paroi de l'enceinte et d'autre part à l'équipage mobile 18.

Pour bénéficier au maximum des avantages de l'invention, il est nécessaire que l'intervalle entre la bobine 18 et les pièces polaires qui lui servent de paroi froide et qui sont directement en vis-à-vis d'elles soit aussi réduit que possible, et de préférence inférieur à un millimètre (par exemple 0,5 millimètre).

C'est dans ces conditions que la conduction thermique devient prépondérante par rapport à la convexion et qu'on bénéficie donc efficacement du fait qu'on a placé un gaz de haute conductivité thermique dans l'entrefer 14.

## Revendications

1. Magnétron agile comprenant un moteur linéaire d'accord en fréquence, ce moteur comportant un bobinage (16) se déplaçant linéairement dans un entrefer (14) délimité par deux pièces polaires (12,13), caractérisé en ce que le bobinage (16) et l'entrefer (14) sont contenus dans une enceinte (26) étanche remplie d'un gaz à haute conductivité thermique (28) tel que de l'hydrogène ou de l'hélium, et en ce qu'un intervalle aussi étroit que possible est aménagé dans l'entrefer (14) rempli du gaz entre le bobinage et chaque pièce polaire, en vue de refroidir le bobinage, de manière prépondérante par conduction thermique.

2. Magnétron agile selon la revendication 1, caractérisé en ce que l'intervalle étroit est inférieur à un millimètre.

3. Magnétron agile selon l'une des revendications 1 ou 2, caractérisé en ce que le gaz est à une pression comprise entre une et trois fois la pression atmosphérique.

4. Magnétron agile selon l'une des revendications 1 à 3, caractérisé en ce que le moteur est contenu dans l'enceinte.

5. Magnétron agile selon l'une des revendications 1 à 4, caractérisé en ce que l'enceinte étanche est fermée par une membrane souple fixée d'une part à la paroi de l'enceinte et d'autre part à un équipage mobile relié au bobinage.

## Patentansprüche

1. Frequenzagiles Magnetron mit einem Linearmotor zur Frequenzabstimmung, wobei der Motor eine Wicklung (16) enthält, die sich linear in einem Luftspalt (14) verstellt, der durch zwei Polstücke (12, 13) abgegrenzt ist, dadurch gekennzeichnet, daß die Wicklung (16) und der Luftspalt (14) in einem dichten Gehäuse (26) enthalten sind, welches mit einem Gas (28) mit hoher thermischer Leitfähigkeit gefüllt ist, z. B. Wasserstoff oder Helium, und daß im mit Gas gefüllten Luftspalt (14) zwischen der Wicklung und jedem Polstück ein Zwischenraum gebildet ist, der so schmal wie möglich ist, um die Wicklung überwiegend durch Wärmeleitung zu kühlen.

2. Frequenzagiles Magnetron nach Anspruch 1, dadurch gekennzeichnet, daß der schmale Zwischenraum kleiner als ein Millimeter ist.

3. Frequenzagiles Magnetron nach einem der Ansprüche 1 oder 2, dadurch gekennzeichnet, daß das Gas einen Druck zwischen dem einfachen und dem dreifachen Atmosphärendruck besitzt.

4. Frequenzagiles Magnetron nach einem der Ansprüche 1 bis 3, dadurch gekennzeichnet, daß der Motor in dem Gehäuse enthalten ist.

5. Frequenzagiles Magnetron nach einem der Ansprüche 1 bis 4, dadurch gekennzeichnet, daß das dichte Gehäuse von einer nachgiebigen Membran verschlossen ist, die zum einen an der Wand des Gehäuses und zum anderen an einem mit der Wicklung verbundenen, beweglichen Teil befestigt ist.

## Claims

1. Frequency-agile magnetron comprising a linear frequency-tuning motor, this motor including a coil (16) moving linearly in an air gap (14) delimited by two pole pieces (12,13), characterized in that the coil (16) and the air gap (14) are contained in a sealed enclosure (26) filled with a gas (28) having a high thermal conductivity, such as hydrogen or helium, and in that as narrow a space as possible is made in the gas-filled air gap (14) between the coil and each pole piece, for the purpose of cooling the coil, predominantly by thermal conduction.

2. Frequency-agile magnetron according to Claim 1, characterized in that the narrow space is less than one millimetre.

3. Frequency-agile magnetron according to one of Claims 1 and 2, characterized in that the gas is at a pressure lying between one and three times the atmospheric pressure.

4. Frequency-agile magnetron according to one of Claims 1 to 3, characterized in that the motor is contained in the enclosure.

5. Frequency-agile magnetron according to one of Claims 1 to 4, characterized in that the sealed enclosure is closed by a flexible membrane fixed, on the one hand, to the wall of the enclosure and, on the other hand, to a movable assembly connected to the coil.
